(19) **Europäisches Patentamt**
**European Patent Office**
**Office européen des brevets**

(11) **EP 2 715 851 B1**

(12) **FASCICULE DE BREVET EUROPEEN**

(45) Date de publication et mention
de la délivrance du brevet:
**08.04.2015 Bulletin 2015/15**

(51) Int Cl.:
*H01M 8/04* *(2006.01)*　　　　*H01M 8/24* *(2006.01)*
*H01M 8/02* *(2006.01)*　　　　*H01M 8/10* *(2006.01)*

(21) Numéro de dépôt: **12724121.4**

(22) Date de dépôt: **24.05.2012**

(86) Numéro de dépôt international:
**PCT/EP2012/059755**

(87) Numéro de publication internationale:
**WO 2012/160162 (29.11.2012 Gazette 2012/48)**

(54) **PILE A COMBUSTIBLE A GESTION THERMIQUE AMELIOREE**

BRENNSTOFFZELLE MIT VERBESSERTER THERMISCHER VERWALTUNG

FUEL CELL WITH IMPROVED THERMAL MANAGEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.05.2011 FR 1154607**

(43) Date de publication de la demande:
**09.04.2014 Bulletin 2014/15**

(73) Titulaire: **Commissariat à l'Énergie Atomique
et aux Énergies Alternatives
75015 Paris (FR)**

(72) Inventeurs:
 • **DROUHAULT, Delphine
 F-73000 Barberaz (FR)**
 • **NIVELON, Pierre
 F-38660 Saint-Hilaire-du-Touvet (FR)**

(74) Mandataire: **Ahner, Philippe et al
BREVALEX
95, rue d'Amsterdam
75378 Paris Cedex 8 (FR)**

(56) Documents cités:
 **EP-A1- 1 519 436　　　US-A1- 2002 192 521
 US-A1- 2008 032 168**

**Description**

La présente invention se rapporte à une pile à combustible à gestion thermique améliorée.

Une pile à combustible, pour délivrer de l'électricité, est alimentée en gaz carburant, par exemple de l'hydrogène dans le cas d'une pile de type pile à combustible à membrane échangeuse de protons (PEMFC pour « Proton Exchange Membrane Fuel Cell »), et en gaz comburant, par exemple de l'air ou de l'oxygène.

Le fonctionnement de la pile à combustible a également pour effet de produire de l'énergie thermique.

Une pile à combustible comporte un empilement de cellules électrochimiques, chaque cellule comporte une anode et une cathode. Les cellules sont maintenues en compression les unes contre les autres par des plaques terminales reliées par des tirants

Un circuit est prévu pour alimenter les cellules en gaz réactifs. Par ailleurs, le rendement électrochimique de la pile est dépendant de la température au sein de la pile et ceci du fait de la nature des matériaux utilisés. Par conséquent, cette température doit être contrôlée afin de ne pas dépasser 80°C et afin d'obtenir un rendement le plus élevé possible. En effet, si la température de fonctionnement est trop basse, on ne peut atteindre le meilleur rendement de fonctionnement de la pile à combustible, et si la pile subit une élévation de température trop importante, les matériaux constituant la pile peuvent être endommagés. La plage optimale de température est 65°C à 75°C.

Comme expliqué précédemment, la pile produit de la chaleur lors de son fonctionnement. Cette chaleur doit généralement être évacuée pour limiter l'élévation de température au sein de la pile. A cet effet, un circuit de gestion thermique est prévu pour faire circuler un fluide caloporteur à travers les cellules. Le circuit comporte une première partie traversant l'empilement de cellules, appelée circuit intérieur et une partie extérieure à l'empilement, appelée circuit extérieur. Le débit et la température du caloporteur sont régulés. Le circuit extérieur comporte deux sous-circuits, un sous-circuit muni d'un échangeur thermique afin de refroidir le caloporteur et un sous-circuit ramenant directement le caloporteur en entrée du circuit intérieur dans lequel le caloporteur n'est pas ou peu refroidi.

Lorsque la température du caloporteur est supérieure à un seuil donné, tout ou partie du caloporteur est envoyé dans le sous-circuit muni de l'échangeur thermique afin qu'il soit refroidi en traversant l'échangeur thermique.

Afin de gérer la température de la pile à combustible, des vannes sont implantées directement en sortie de chaque pile et sont commandées en fonction de la température du caloporteur. Dans le cas d'une pile à combustibles PEMFC: lorsque le fluide a une température supérieure à 75°C, la totalité du fluide est dirigée vers le premier sous-circuit de refroidissement comportant un échangeur de chaleur. Lorsque le fluide atteint une température comprise entre 65°C et 75°C, une partie de ce fluide est déviée vers le deuxième sous-circuit ramenant directement le caloporteur en entrée du circuit intérieur et le premier court-circuit muni de l'échangeur, la fraction court-circuitée étant d'autant plus grande que la température est proche de 65°C. Pour des températures de fluides inférieures à 65°C, la totalité du débit est court-circuitée directement vers l'entrée des empilements.

Sur des piles de fortes puissances électriques, de l'ordre de plusieurs dizaines de kW, plusieurs empilements de plaques bipolaires connectées hydrauliquement en parallèle sont réalisés pour limiter l'encombrement en hauteur et limiter les pertes de charges dans la distribution des fluides caloporteur, comburant et carburant, ainsi que pour abaisser le niveau de tension électrique de la pile.

Dans le cas d'une pile comportant au moins un premier et un deuxième empilement alimentés en caloporteur en parallèle, chaque empilement étant équipé d'une vanne afin de réguler sa température, si le premier empilement s'échauffe plus rapidement que le deuxième, la vanne s'ouvre vers le premier sous-circuit de refroidissement muni de l'échangeur. Or la perte de charge augmente du fait de la traversée de l'échangeur thermique. En conséquence, le débit de liquide caloporteur dans le premier empilement diminue, ce qui réduit la chaleur évacuée du premier empilement. Cependant, le débit total fourni par la pompe restant identique, le débit dans le deuxième caloporteur augmente, ce qui provoque une augmentation de l'échange thermique dans le deuxième empilement, et donc une baisse de la température du deuxième empilement. Le premier empilement, qui était initialement chaud, chauffe davantage et le deuxième empilement, qui était initialement plus froid, est encore plus refroidi. Il apparaît alors une amplification du déséquilibre thermique entre les deux empilements, ce qui peut compromettre l'intégrité des membranes électrochimiques de l'empilement le plus chaud.

Le document US2002192521 présente ainsi une pile à combustible comportant deux empilements de cellules électrochimiques ayant un système de gestion thermique formé par un circuit de circulation d'un fluide caloporteur dans chacun des empilements puis dans un échangeur thermique.

**EXPOSÉ DE L'INVENTION**

C'est par conséquent un but de la présente invention d'offrir une pile à combustible comportant au moins deux empilements de cellules dans laquelle un déséquilibre thermique entre les empilements est évité, ou pour le moins réduit.

Le but de la présente invention est atteint par une pile à combustible comportant au moins deux empilements de cellules et un système de gestion thermique comportant un circuit intérieur de circulation de caloporteur dans les empilements , et un circuit extérieur, formé d'un premier sous-circuit muni d'un échangeur thermique et d'un deuxième sous-circuit ramenant directement le caloporteur en entrée du circuit intérieur traversé par un circuit de caloporteur et des vannes situées en sortie des sous-circuits intérieurs et commandant la circulation du caloporteur dans l'un et/ou l'autre des deux sous-circuits extérieurs. La pile comporte également des moyens pour assurer une perte de charge proche ou égale entre les deux sous-circuits extérieurs.

On entend par "des pertes de charge proches ou égales" dans la présente demande, des pertes de charge dont l'écart rapporté à une valeur cible de perte de charge est au plus de 20 %, ce qui permet effectivement d'éviter un déséquilibre entre les deux empilements.

Avantageusement, on augmente la perte de charge dans le deuxième sous-circuit extérieur. Pour cela, on dégrade l'écoulement dans le deuxième sous-circuit, cependant de manière surprenante, cet écoulement dégradé a un effet favorable sur le fonctionnement général de la pile.

De préférence, des moyens pour augmenter cette perte de charge sont disposés dans les vannes au niveau de la connexion au deuxième sous-circuit extérieur. Par exemple il s'agit d'un diaphragme réduisant la section d'écoulement du caloporteur.

De manière très avantageuse, les vannes sont des vannes thermostatiques, ce qui simplifie la gestion thermique de la pile.

De manière également très avantageuse, chaque vanne d'un empilement est située dans l'une des plaques d'extrémité de l'empilement, ce qui permet de réduire l'encombrement axial de la pile.

La présente invention a alors pour objet une pile à combustible comportant au moins deux empilements de cellules électrochimiques et des plaques d'extrémité appliquant un effort de serrage aux empilements de cellules électrochimiques, un système de gestion thermique formé par un circuit de circulation d'un fluide caloporteur dans chacun des empilements, dit circuit intérieur, les deux empilements étant connectés en parallèle, et par un circuit de circulation du fluide caloporteur à l'extérieur des empilements, dit circuit extérieur, le circuit extérieur comportant un premier sous-circuit muni d'un échangeur thermique et un deuxième sous-circuit connecté directement à l'entrée du circuit intérieur, des dispositifs pour commander la circulation du fluide caloporteur vers l'un et/ou l'autre des sous-circuits en fonction de la température dudit fluide caloporteur à la sortie de chacun des empilements, ledit système de gestion thermique comportant des moyens pour assurer que le premier sous-circuit extérieur et le deuxième sous-circuit extérieur présentent des pertes de charge proches ou identiques.

De manière préférée, les moyens pour générer une perte de charge proche ou égale à celle générée par l'échangeur thermique dans le premier sous-circuit extérieur sont disposés dans le deuxième sous-circuit extérieur.

De préférence, chaque empilement comporte des moyens pour générer une perte de charge.

Avantageusement, les moyens pour générer une perte de charge sont disposés dans les dispositifs de commande.

Dans un exemple particulièrement avantageux, les moyens pour générer une perte de charge sont formés par une section de passage de section réduite, formant diaphragme. La section de passage réduite peut être réalisée d'un seul tenant avec un embout de connexion d'au moins un dispositif de commande au deuxième sous-circuit extérieur. En alternative, la section de passage réduite peut être formée par une plaque percée montée dans au moins un dispositif de commande.

De manière avantageuse, au moins l'un des dispositifs de commande est intégré dans une plaque d'extrémité.

De manière préférée, au moins l'un des dispositifs de commande est une vanne thermostatique.

La pile à combustible est par exemple une pile PEMFC.

La présente invention a également pour objet un procédé de réalisation d'une pile à combustible selon l'invention, comportant les étapes de :

a) détermination de la perte de charge générée par l'échangeur thermique ;
b) modification du premier et/ou du deuxième sous-circuit extérieur afin que les pertes de charge dans les deux sous-circuits soient proches ou identiques.

L'étape b) peut comporter la sous-étape de choix des moyens à introduire dans le deuxième sous-circuit pour générer une perte de charge proche ou identique à celle de l'échangeur thermique. Lors de l'étape b), par exemple ce sont les dimensions du diaphragme qui sont déterminées.

**BRÈVE DESCRIPTION DES DESSINS**

La présente invention sera mieux comprise à l'aide de la description qui va suivre et des dessins en annexes sur lesquels :

- la figure 1 est une représentation schématique d'une pile selon la présente invention sur laquelle les circuits de circulation du caloporteur son représentés,
- les figures 2A et 2B sont des vues en coupe d'un exemple de réalisation d'une vanne thermostatique pouvant être mis en oeuvre dans la pile de la présente invention dans deux états différents,
- la figure 3 est une vue en coupe d'un autre exemple de réalisation d'une vanne thermostatique pouvant être mis en oeuvre dans la pile de la présente invention.

**EXPOSÉ DÉTAILLÉ DE MODES DE RÉALISATION PARTICULIERS**

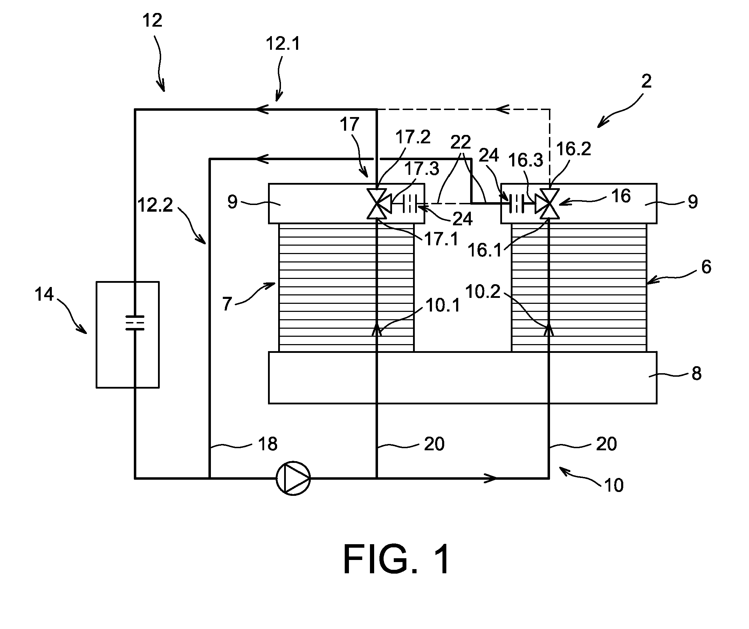

Sur la figure 1, on peut voir une représentation schématique d'une pile à combustible 2 équipée d'un système de régulation thermique 4.

La pile à combustible 2 comporte deux empilements 6, 7 de cellules électrochimiques composées de plaques bipolaire et de membranes échangeuses d'ions disposées en alternance, et des plaques d'extrémité amont 8 et aval 9 de part et d'autre des empilements.

Les plaques d'extrémité 8, 9 exercent un effort de compression sur les empilements 6, 7 pour assurer une conduction électrique uniformément répartie sur toute la surface des éléments composant les cellules. Dans l'exemple représenté, la pile comporte une plaque d'extrémité amont commune aux deux empilements, mais elles pourraient être séparées. Les plaques d'extrémité aval pourraient, elles aussi, être remplacées par une plaque commune.

Par ailleurs, l'alimentation des cellules en fluide réactif, par exemple en hydrogène d'une part et en oxygène d'autre part, est réalisée à travers une ou les deux plaques d'extrémité 8, 9. La ou les plaques d'extrémité comportent des orifices d'alimentation et d'évacuation connectés à la fois à un circuit au sein des empilements, et à un circuit d'alimentation et de récupération (non représenté). L'effort de serrage appliqué par les plaques d'extrémité 8, 9 assure également une bonne étanchéité aux gaz réactifs.

Le système de régulation thermique 4 comporte un circuit de circulation du fluide caloporteur dont une partie 10 permet une circulation au sein des empilements 6, 7 et dont une autre partie 12 permet une circulation à l'extérieur des empilements 6, 7.

Les circuits de circulation traverse les plaques d'extrémité 8, 9.

La partie 10 du circuit de circulation au sein des l'empilement 6, 7 dit circuit intérieur, est par exemple réalisée directement dans les cellules.

L'effort de serrage appliqué par les plaques d'extrémité 8, 9 assure également une bonne étanchéité au fluide caloporteur.

Le circuit de circulation comporte une pompe de circulation P pour assurer la circulation du fluide caloporteur dans les empilements et à l'extérieur de celui-ci.

Le circuit intérieur 10 comporte deux sous-circuits intérieurs 10.1, 10.2, chacun traversant un empilement, alimentés en parallèles par la pompe P.

La partie 12 du circuit à l'extérieur de des empilements, dit circuit extérieur 12, comporte deux sous-circuits de circulation 12.1, 12.2. Le premier sous-circuit 12.1 comporte un échangeur thermique 14 pour permettre au fluide caloporteur d'échanger des calories avec l'environnement extérieur, par exemple pour céder des calories à l'extérieur. Mais on peut envisager qu'il capte des calories de l'environnement extérieur.

Le deuxième sous-circuit 12.2 est destiné à permettre un retour du fluide caloporteur dans les empilements sans qu'il traverse l'échangeur. Ce deuxième sous-circuit 12.2 est donc connecté hydrauliquement en parallèle avec le premier sous-circuit 12.1 et permet d'éviter la circulation du fluide dans le premier sous-circuit 12.1.

La circulation du fluide caloporteur dans l'un ou l'autre des sous-circuits 12.1, 12.2 est obtenue au moyen de dispositifs de commande tels que des vannes trois voies 16, 17.

Le premier empilement est connecté au premier sous-circuit et au deuxième sous-circuit par l'intermédiaire de la vanne trois vois 16 et le deuxième empilement est connecté au premier sous-circuit et au deuxième sous-circuit par l'intermédiaire de la vanne trois voies 17.

Le deuxième sous-circuit comporte une portion commune 18 d'écoulement dans laquelle les caloporteurs des deux empilements se mélangent et des portions amont 20 et aval 22 reliant chacun des circuits intérieurs des empilements à la portion commune 18.

Chaque vanne 16, 17 de commande comporte une entrée 16.1, 17.1 connectée à la sortie du circuit intérieur 10 et deux sorties 16.2, 16.3, 17.2, 17.3 connectées aux entrées des sous-circuits 12.1, 12.2 et assure le passage de tout ou partie du fluide caloporteur dans l'un ou l'autre des sous-circuits 12.1, 12.2.

Les vannes trois voies 16, 17 sont commandées en fonction de la température du caloporteur traversant les empilements. Le caloporteur circulant dans l'un ou l'autre des empilements est envoyé dans le premier et/ou deuxième sous-circuit en fonction de sa température.

Par exemple, les vannes de commande 16, 17 peuvent être des vanne trois voies asservies à une mesure de la température du fluide caloporteur, par exemple au moyen d'une sonde de température plongeant dans le fluide caloporteur et une unité électronique commandant l'état des vannes.

De manière particulièrement avantageuse, les vannes de commande 16, 17 sont des vannes thermostatiques dont l'état est directement commandé par le fluide caloporteur, plus particulièrement la température du fluide caloporteur, sans nécessiter de moyens supplémentaires, par exemple de type électronique. Pour rappel, une vanne thermostatique est une soupape comprenant un élément à fort coefficient de dilatation qui se dilate ou se rétracte en fonction de la température du fluide qui l'entoure en libérant ou en obstruant des orifices de passage du fluide caloporteur. Dans le cas particulier d'une vanne trois voies, l'élément à fort coefficient de dilatation, obture soit complètement une des trois voies, soit partiellement deux des trois voies. Outre une fiabilité et une robustesse accrues de la commande de la vanne, un gain de place supplémentaire est obtenu.

De manière également très avantageuse, l'une ou les deux vannes de commande 16, 17 est ou sont disposée(s) à l'intérieur de la ou les plaque(s) d'extrémité aval 9. Cette intégration permet de réduire l'encombrement du système de régulation thermique. En effet, les plaques d'extrémité présentent généralement une certaine épaisseur afin d'assurer le serrage des cellules.

Le circuit de gestion thermique comporte des moyens 24 assurant que la perte de charge du premier sous-circuit et celle du deuxième sous-circuit soient proches ou égales. On cherche à ce que les valeurs de perte de charge dans les deux sous-circuits soient les plus proches possibles, i.e. à ce qu'un écart entre les deux pertes de charge rapporté à la valeur cible soit inférieur ou égale à 20 %.

De manière préférentielle, le deuxième sous-circuit comporte des moyens 24 pour augmenter sa perte de charge de sorte que sa perte de charge soit proche de ou égale à celle du premier sous-circuit extérieur, la perte de charge du premier sous-circuit extérieur étant dû en grande partie à l'échangeur thermique.

De manière préférée, ces moyens peuvent être Un diaphragme formant un rétrécissement brusque immédiatement suivi d'un élargissement brusque, ceci en 1 ou 2 mm d'écoulement dans le deuxième sous-circuit extérieur, i.e. un trou circulaire réalisé dans une plaque de faible épaisseur, de diamètre réduit par rapport à celle de la conduite dans lequel il est installé. Le diaphragme présente l'avantage de pouvoir être facilement intégré et son dimensionnement est bien connu de la littérature dans le domaine des écoulements. En outre, un diaphragme est très compact.

De manière générale, tout moyen augmentant les frottements du fluide sur les parois qui l'environnent peuvent convenir pour former les moyens 24 pour augmenter la perte de charge. Par conséquent, tout moyen propre à créer une perte de charge est susceptible de convenir que ce soit un changement de section (par exemple une restriction ou un agrandissement brusque de la section de passage), un changement de direction (par exemple des coudes les plus « serrés » possibles), ou une grande longueur de tuyauterie.

De préférence, cette restriction de passages est formée directement dans la sortie des vannes de commande vers le deuxième sous-circuit extérieur, simplifiant ainsi la réalisation de la pile.

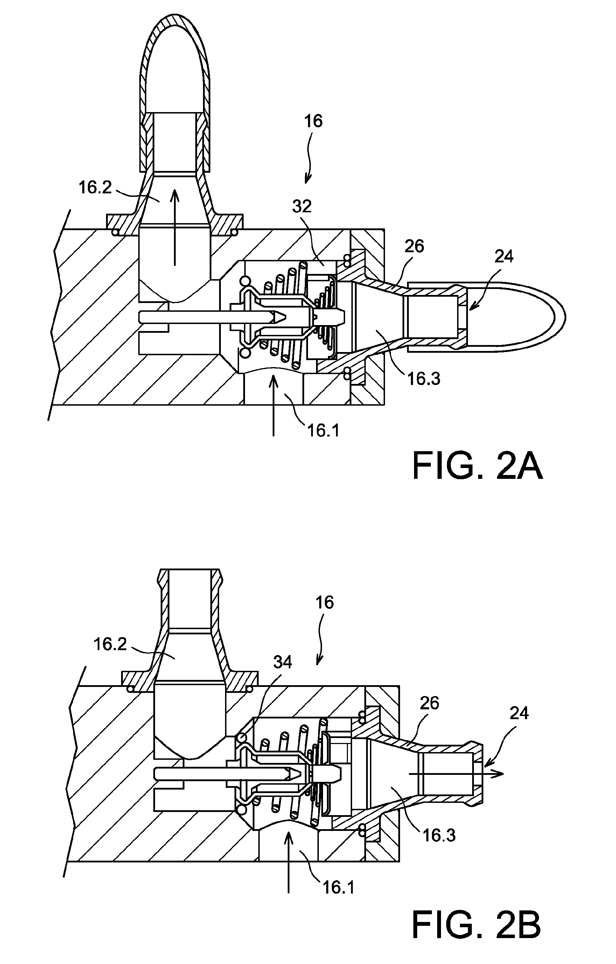

Sur les figures 2A et 2B, on peut voir un exemple de réalisation avantageux d'une vanne thermostatique 16 comportant une telle section de passage réduite 24. Dans cet exemple, la section de passage réduite 24 est formée à l'extrémité de l'embout de connexion 26 de la sortie de la vanne vers le deuxième sous-circuit extérieur 12.2. Cette section réduite est formée d'un seul tenant avec l'embout 26. Cet exemple de réalisation présente l'avantage de ne pas nécessiter de pièce supplémentaire, l'ajout de cette section réduite n'a donc pas d'incidence sur le montage de la vanne de commande et sur sa mise en place dans le circuit.

Sur la figure 2A, la vanne thermostatique assure l'écoulement du caloporteur uniquement vers le premier sous-circuit extérieur muni de l'échangeur thermique, un obturateur 32 fermant le passage vers le premier sous-circuit extérieur 12.1. Le caloporteur a alors une température supérieure à un seuil donné, par exemple de l'ordre de 75°C dans le cas d'une pile à combustible de type PEMFC.

Sur la figure 2B, la vanne thermostatique assure l'écoulement du caloporteur uniquement vers le deuxième sous-circuit extérieur 12.2, un obturateur 34 fermant le passage vers le deuxième sous-circuit. Le caloporteur a alors une température inférieure à un seuil donné, par exemple de l'ordre de 65°C dans le cas d'une pile à combustible de type PEMFC.

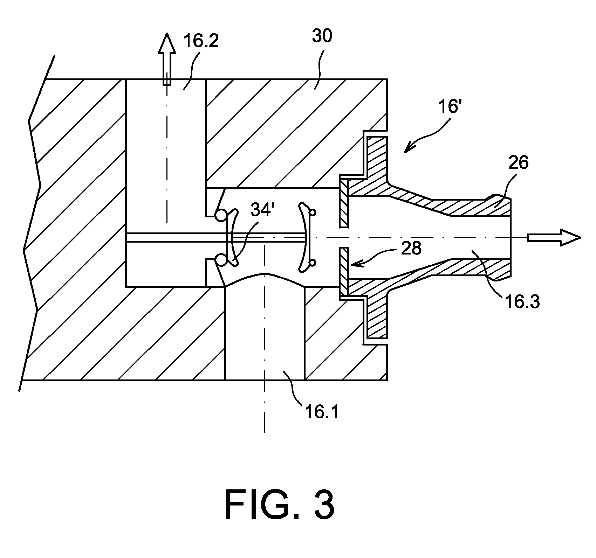

Sur la figure 3, on peut voir un autre exemple de réalisation d'une vanne de commande 16' dans lequel la section de passage réduite est obtenue par ajout d'une plaque percée 28 à l'intérieur de la vanne. Par exemple, la rondelle 28 est introduite en amont du connecteur de sortie de la vanne vers le deuxième sous-circuit. Avantageusement, la plaque percée 28 est pincée entre le corps 30 de la vanne et l'embout de connexion 26, ce qui permet un maintien relativement simple. La vanne 16', représentée sur la figure 3, est dans un état d'obturation de l'écoulement vers le premier sous-circuit extérieur 12.1, par un obturateur 34'.

La disposition des moyens assurant la perte de charge dans les vannes de commande n'est en aucun cas limitatif, on peut envisager qu'ils soient prévus dans les deux portions aval du deuxième sous-circuit extérieur, dans les deux portions amont du deuxième sous-circuit extérieur, l'un dans une portion amont d'un empilement et l'autre dans la portion aval de l'autre empilement.

En outre, les moyens générant la perte de charge dans les vannes ne sont pas nécessairement identiques pour les deux empilements.

Dans la pile représentée schématiquement sur la figure 1, les vannes de commande sont intégrées dans la plaque terminale aval, ce qui permet de réduire l'encombrement de la pile. De plus, les moyens de perte de charge sont réalisés directement dans les vannes, ce qui réduit encore davantage l'encombrement. De plus, dans le cas de vannes thermostatiques, la gestion thermique de la pile est automatique, particulièrement simple et ne nécessite aucune commande ni mesure extérieure.

Nous allons maintenant décrire succinctement le fonctionnement de la pile selon la présente invention.

Lors du fonctionnement de la pile, le caloporteur circule dans les deux empilements dans la pile afin d'en extraire la chaleur produite par le fonctionnement des cellules. Le caloporteur circule dans le circuit intérieur et est dirigé vers le premier sous-circuit extérieur 12.1 et/ou vers le deuxième sous-circuit extérieur 12.2 par les vannes de commande 16, 17 en fonction de la température de chacun des caloporteurs circulant dans chacun des empilements 6, 7.

Par exemple, si la température du caloporteur sortant d'un empilement est inférieure à 65°, le caloporteur est envoyé dans le deuxième sous-circuit 12.2 pour qu'il soit renvoyé directement dans les empilements sans céder de chaleur via l'échangeur thermique 14. Si la température du caloporteur dans le premier empilement 6 est supérieur à 75°C, la vanne de commande 16 envoie tout le caloporteur dans le premier sous-circuit extérieur 12.1 pour qu'il soit refroidi.

Lorsque le caloporteur a une température comprise entre 65°C et 75°C, la vanne de commande 16 envoie une partie du caloporteur dans le premier sous-circuit extérieur 12.1 et l'autre partie du caloporteur dans le deuxième sous-circuit extérieur 12.2.

Considérons le cas où le premier empilement 6 s'échauffe plus que le deuxième empilement 7 et où la température du caloporteur sortant du premier empilement 6 est supérieure à 75°C et la température du caloporteur sortant du deuxième empilement 7 est inférieure à 65°C. La première vanne 16 envoie tout le caloporteur sortant du premier empilement 6 dans le premier sous-circuit extérieur 12.1 muni de l'échangeur thermique 17, la deuxième vanne 17 envoie le caloporteur sortant du deuxième empilement 7 dans le deuxième sous-circuit extérieur 12.2. Le premier sous-circuit 12.1 connaît une certaine perte de charge due à la présence de l'échangeur thermique 14 et le deuxième sous-circuit 12.2 connaît une certaine perte de charge due au diaphragme 24, le diaphragme 24 est choisi de sorte que les deux pertes de charge soient proches, voire identiques. Les débits de caloporteur dans les deux sous-circuits 12.1, 12.2 sont alors très proches, voire identiques, les quantités de caloporteur circulant dans les deux empilements 6, 7 sont alors sensiblement identiques, ce qui assure un refroidissement équilibré entre les deux empilements 6, 7.

Nous allons maintenant donner un exemple de procédé de réalisation d'un circuit de gestion thermique selon l'invention.

Le procédé de réalisation comporte une étape de détermination de la perte de charge à provoquer dans le deuxième sous-circuit extérieur.

On considère le cas où la perte de charge à provoquer est obtenue au moyen d'un diaphragme.

On détermine tout d'abord la perte de charge du premier sous-circuit extérieur muni de l'échangeur. Cette perte de charge peut être divisée en deux parties : une partie dite « singulière », correspondant à la résistance au passage du fluide provoquée par tous les changements « géométriques » dans la section de passage du fluide, et une partie dite « régulière » correspondant aux frottements le long des parois des sections de passage.

Ces deux coefficients de pertes de charge (régulières et singulières) permettent d'obtenir des pertes de charges identiques dans les sous-circuits extérieurs du circuit.

La perte de charge peut s'écrire:

$$DP = (k_{reg} + K_{sing}).V^2$$

La perte de charge singulière à ajouter en sortie de la vanne de commande vers le deuxième sous-circuit peut être calculée de la manière suivante :

$$\Delta H = \left( \frac{S_{amont}}{S_{diaphragme}} - 1 \right)^2 . \frac{V_{amont}}{2g}$$

où $S_{amont}$ représente la section de passage du fluide en amont du diaphragme, $S_{diaphragme}$, la section de passage du diaphragme, $V_{amont}$, la vitesse du fluide en amont du diaphragme, g, l'accélération de la pesanteur, et $\Delta H$, la perte de charge occasionnée par le diaphragme (en mètre de Colonne d'Eau mCE).

Dans le cas d'une pile à combustible de puissance environ 15kW, dont le flux du liquide de refroidissement, par exemple de l'eau glycolée, est égal à environ 7 kg/s.

La perte de charge à générer est de 150 mbar pour un débit de fluide de 2,5 m³/h.

Par le calcul, on détermine que le diaphragme à utiliser pour générer une telle perte de charge présente un diamètre de 6,9 mm, pour un diamètre amont de 22,6 mm.

En variante, on peut envisager de diminuer la perte de charge dans le premier sous-circuit en la pressurisant, par exemple en intégrant un dispositif de type pompe.... On peut envisager également d'augmenter la perte de charge dans le deuxième sous-circuit et de la diminuer dans le premier sous-circuit.

La présente invention s'applique à des piles comportant plus de deux empilements.

Grâce à l'invention, le non déséquilibre thermique entre les différents empilements en parallèle de la pile est assuré, de manière très simple et sans provoquer un accroissement de l'encombrement du système de gestion thermique et donc de la pile.

**Revendications**

**1.** Pile à combustible comportant au moins deux empilements (6, 7) de cellules électrochimiques et des plaques d'extrémité (8, 9) appliquant un effort de serrage aux empilements (6, 7) de cellules électrochimiques, un système de gestion thermique formé par un circuit de circulation d'un fluide caloporteur dans chacun des empilements (6, 7), dit circuit intérieur (10), les deux empilements étant connectés en parallèle, **caractérisé en ce que** le système de gestion thermique est formé également par un circuit de circulation du fluide caloporteur à l'extérieur des empilements (6, 7), dit circuit extérieur (12), le circuit extérieur (12) comportant un premier sous-circuit (12.1) muni d'un échangeur thermique (14) et un deuxième sous-circuit (12.2) connecté directement à l'entrée du circuit intérieur (10), des dispositifs (16) pour commander la circulation du fluide caloporteur vers l'un et/ou l'autre des sous-circuits (12.1, 12.2) en fonction de la température dudit fluide caloporteur à la sortie de chacun des empilements, ledit système de gestion thermique comportant des moyens (24) pour assurer que le premier sous-circuit extérieur et le deuxième sous-circuit extérieur présentent des pertes de charge proches ou identiques.

2. Pile à combustible selon la revendication 1, dans laquelle les moyens (24) pour générer une perte de charge proche ou égale à celle générée par l'échangeur thermique dans le premier sous-circuit extérieur (12.1) sont disposés dans le deuxième sous-circuit extérieur (12.2).

3. Pile à combustible selon la revendication 2, dans laquelle chaque empilement comporte des moyens pour générer une perte de charge.

4. Pile à combustible selon la revendication 3, dans laquelle les moyens pour générer une perte de charge (24) sont disposés dans les dispositifs de commande (16).

5. Pile à combustible selon la revendication 3 ou 4, dans laquelle les moyens pour générer une perte de charge (24) sont formés par une section de passage de section réduite, formant diaphragme.

6. Pile à combustible selon la revendication 5, dans laquelle la section de passage réduite est réalisée d'un seul tenant avec un embout de connexion d'au moins un dispositif de commande (16) au deuxième sous-circuit extérieur.

7. Pile à combustible selon la revendication 5 ou 6, dans laquelle la section de passage réduite est formée par une plaque percée montée dans au moins un dispositif de commande (16).

8. Pile à combustible selon l'une des revendications 1 à 7, dans laquelle au moins l'un des dispositifs de commande (16) est intégré dans une plaque d'extrémité.

9. Pile à combustible selon l'une des revendications 1 à 8, dans laquelle au moins l'un des dispositifs de commande (16) est une vanne thermostatique.

10. Pile à combustible selon l'une des revendications 1 à 9, étant une pile PEMFC.

11. Procédé de réalisation d'une pile à combustible selon l'une des revendications 1 à 10, comportant les étapes de :

    a) détermination de la perte de charge générée par l'échangeur thermique ;
b) modification du premier et/ou du deuxième sous-circuit extérieur afin que les pertes de charge dans les deux sous-circuits soient proches ou identiques.

12. Procédé de réalisation d'une pile à combustible selon la revendication 11, dans lequel l'étape b) comporte la sous-étape de choix des moyens à introduire dans le deuxième sous-circuit pour générer une perte de charge proche ou identique à celle de l'échangeur thermique.

13. Procédé de réalisation d'une pile à combustible selon la revendication 12, dans lequel lors de l'étape b), les dimensions du diaphragme sont déterminées.

**Patentansprüche**

1. Brennstoffzelle, welche Folgendes aufweist: mindestens zwei Stapel (6, 7) elektrochemischer Zellen sowie Endplatten (8, 9), welche eine Spannkraft auf die Stapel (6, 7) elektrochemischer Zellen ausüben, ein Wärmemanagementsystem, welches durch einen Zirkulationskreislauf eines Kühlmittels in jedem der Stapel (6, 7), den sogenannten Innenkreislauf (10), gebildet ist, wobei die zwei Stapel parallel geschaltet sind, **dadurch gekennzeichnet, dass** das Wärmemanagementsystem darüber hinaus durch einen Zirkulationskreislauf eines Kühlmittels außerhalb der Stapel (6, 7), den sogenannten Außenkreislauf (12), gebildet ist, wobei dieser Außenkreislauf (12) einen ersten Teilkreislauf (12.1), welcher einen Wärmetauscher (14) umfasst, sowie einen zweiten Teilkreislauf (12.2), welcher direkt mit dem Eingang des Innenkreislaufs (10) verbunden ist, aufweist, Einrichtungen (16) zur Steuerung der Zirkulation des Kühlmittels zu dem bzw. in den einen und/oder den anderen der Teilkreisläufe (12.1, 12.2) als Funktion der Temperatur des Kühlmittels am Ausgang jedes Stapels, wobei das Wärmemanagementsystem Einrichtungen (24) aufweist, um sicherzustellen, dass der erste äußere Teilkreislauf und der zweite äußere Teilkreislauf nur geringfügig voneinander abweichende oder identische Druckverluste aufweisen.

2. Brennstoffzelle nach Anspruch 1, in welcher die Einrichtungen (24) zur Erzeugung eines Druckverlusts, welcher verglichen mit dem von dem Wärmetauscher in dem ersten äußeren Teilkreislauf (12.1) erzeugten Druckverlust nur geringfügig abweicht oder identisch mit diesem ist, in dem zweiten äußeren Teilkreislauf (12.2) angeordnet sind.

3. Brennstoffzelle nach Anspruch 2, in welcher jeder Stapel Einrichtungen zur Erzeugung eines Druckverlusts aufweist.

**4.** Brennstoffzelle nach Anspruch 3, in welcher die Einrichtungen zur Erzeugung eines Druckverlusts (24) in den Steuervorrichtungen (16) angeordnet sind.

**5.** Brennstoffzelle nach Anspruch 3 oder 4, in welcher die Einrichtungen zur Erzeugung eines Druckverlusts (24) durch einen Durchlassabschnitt mit reduziertem Querschnitt, welcher eine Stauscheibe, gebildet sind.

**6.** Brennstoffzelle nach Anspruch 5, in welcher der reduzierte Durchlassabschnitt in einem Stück mit einem Verbindungsstutzen zumindest einer Steuervorrichtung (16) an dem zweiten äußeren Teilkreislauf realisiert ist.

**7.** Brennstoffzelle nach Anspruch 5 oder 6, in welcher der reduzierte Durchlassabschnitt durch eine durchbohrte Platte gebildet ist, welche in zumindest eine Steuervorrichtung (16) eingebaut ist.

**8.** Brennstoffzelle nach einem der Ansprüche 1 bis 7, in welcher zumindest eine der Steuervorrichtungen (16) in einer Endplatte integriert ist.

**9.** Brennstoffzelle nach einem der Ansprüche 1 bis 8, in welcher zumindest eine der Steuervorrichtungen (16) ein thermostatisches Ventil ist.

**10.** Brennstoffzelle nach einem der Ansprüche 1 bis 9, wobei es sich um eine PEMFC-Brennstoffzelle handelt.

**11.** Verfahren zur Herstellung einer Brennstoffzelle nach einem der Ansprüche 1 bis 10, wobei das Verfahren die folgenden Schritte umfasst:

> a) Bestimmung des Druckverlustes, welcher durch den Wärmetauscher erzeugt wird;
> b) Änderung des ersten und/oder des zweiten äußeren Teilkreislaufs , damit die Druckverluste in den beiden Teilkreisläufen nur geringfügig voneinander abweichen oder identisch sind.

**12.** Verfahren zur Herstellung einer Brennstoffzelle nach Anspruch 11, in welchem der Schritt b) den Unterschritt der Auswahl von Mitteln zur Einbringung in den zweiten Teilkreislauf aufweist, um einen nur geringfügig abweichenden oder identischen Druckverlust verglichen mit dem des Wärmetauschers zu erzeugen.

**13.** Verfahren zur Realisierung einer Brennstoffzelle nach Anspruch 12, in welcher bei Schritt b) die Abmessungen der Stauscheibe bestimmt werden.

**Claims**

**1.** A fuel cell comprising at least two stacks (6, 7) of electrochemical cells and end plates (8, 9) applying a tightening strain to the stacks (6, 7) of electrochemical cells, a heat management system formed by a circuit for flowing a coolant into each of the stacks (6, 7), called the inside circuit (10), both stacks being connected in parallel, **characterized in that** the heat management system also comprises a circuit for flowing the coolant outside the stacks (6, 7), called the outside circuit (12), the outside circuit (12) comprising a first subcircuit (12.1) provided with a heat exchanger (14) and a second subcircuit (12.2) directly connected to the inlet of the inside circuit (10), devices (16) for controlling the flow of the coolant to either or both subcircuits (12.1, 12.2) as a function of the temperature of said coolant at the output of each of the stacks, said heat management system comprising means (24) for ensuring that the first outside subcircuit and the second outside subcircuit have close or identical head losses.

**2.** The fuel cell according to claim 1, wherein the means (24) for generating a head loss close or equal to that generated by the heat exchanger in the first outside subcircuit (12.1) are provided in the second outside subcircuit (12.2).

**3.** The fuel cell according to claim 2, wherein each stack comprises means for generating a head loss.

**4.** The fuel cell according to claim 3, wherein the means for generating a head loss (24) are provided in the controlling devices (16).

**5.** The fuel cell according to claim 3 or 4, wherein the means for generating a head loss (24) are formed by a reduced cross-section passage section forming a diaphragm.

**6.** The fuel cell according to claim 5, wherein the reduced cross-section passage section is made as one piece with a tip for connecting at least one controlling device (16) to the second outside subcircuit.

**7.** The fuel cell according to claim 5 or 6, wherein the reduced cross-section passage section is formed by a drilled plate mounted in at least one controlling device (16).

**8.** The fuel cell according to one of claims 1 to 7, wherein at least one of the controlling devices (16) is integrated in an end plate.

**9.** The fuel cell according to one of claims 1 to 8, wherein at least one of the controlling devices (16) is a thermostatic valve.

10. The fuel cell according to one of claims 1 to 9, being a PEMFC cell.

11. A method for manufacuring a fuel cell according to one of claims 1 to 10, comprising the steps of:

a) determining the head loss generated by the heat exchanger;
b) modifying the first and/or second outside subcircuit for the head losses in both subcircuits to be close or identical.

12. The method for manufacturing a fuel cell according to claim 11, wherein step b) comprises the substep of selecting means to be introduced in the second subcircuit to generate a head loss close or identical to that of the heat exchanger.

13. The method for manufacturing a fuel cell according to claim 12, wherein during step b), the dimensions of the diaphragm are determined.

FIG. 1

FIG. 2A

FIG. 2B

11

FIG. 3

**EP 2 715 851 B1**

**Documents brevets cités dans la description**

- US 2002192521 A